# EUROPÄISCHE PATENTSCHRIFT

(11) **EP 1 601 451 B1**
(45) Veröffentlichungstag und Bekanntmachung des Hinweises auf die Patenterteilung: **13.12.2006**
(21) Anmeldenummer: 04716538.6
(22) Anmeldetag: 03.03.2004
(51) Int. Cl.: B01F 13/00, B01F 7/24, B65D 88/74, B01F 15/00, F26B 9/08, A01F 25/08

(54) **VORRICHTUNG ZUM UMWÄLZEN VON KORNGUT**
DEVICE FOR CIRCULATING GRAIN PRODUCTS
DISPOSITIF POUR FAIRE CIRCULER UNE MATIERE EN GRAINS

(30) Priorität: 04.03.2003 DE 10309317; 07.11.2003 DE 20317311 U; 23.12.2003 DE 20320104 U
(43) Veröffentlichungstag der Anmeldung: 07.12.2005
(73) Patentinhaber: Wellenbrock, Lothar, 19073 Wittenförden (DE); Brautferger, Norbert, 19073 Wittenförden (DE)
(72) Erfinder: Wellenbrock, Lothar, 19073 Wittenförden (DE); Brautferger, Norbert, 19073 Wittenförden (DE)
(74) Vertreter: Jaap, Reinhard
(86) Internationale Anmeldenummer: PCT/DE2004/000387
(87) Internationale Veröffentlichungsnummer: WO 2004/078331

(56) Entgegenhaltungen:
- US-A- 3 198 493
- US-A- 3 272 480
- US-A- 4 491 422
- US-A- 5 980 100

## Beschreibung

Die Erfindung bezieht sich auf eine Vorrichtung nach dem Oberbegriff des Anspruchs 1. Derartige Vorrichtungen werden in der Getreidewirtschaft insbesondere bei der Trocknung und/oder der Lagerhaltung von Korngut eingesetzt.

Erntefrisches Korngut besitzt einen Feuchtigkeitsgehalt, der eine schadlose Lagerhaltung nicht zulässt. Das feuchte Korngut bildet immer größer werdende Wärmenester aus, die das Korngut zerstören. Außerdem siedeln sich dort verstärkt Ungeziefer an, die zur Zerstörung des Korngutes beitragen.
Vor der eigentlichen Lagerung muss erntefrisches Korngut daher ausreichend getrocknet werden, was in der Regel in Trockensilos geschieht. Dabei wird das erntefrische Korngut kontinuierlich oder in einem Zyklus von oben in das Trockensilo gegeben, während trockene und warme Luft von unten in das Trockensilo eingeblasen wird. Die trockene Luft entzieht dem Korngut eine bestimmte Menge an Feuchtigkeit und entweicht als Abluft aus dem oberen Bereich des Trockensilos. Zur Beschleunigung des Trocknungsprozesses wird das Korngut ständig umgewälzt und vermischt. Dazu ist es allgemein bekannt, eine im oberen Bereich des Trockensilos gelagerte und umlaufende Umwälzeinrichtung einzusetzen. Diese Umwälzeinrichtung ist mit mehreren nebeneinander angeordneten und angetriebenen Förderschnecken ausgerüstet, die in das abgelegte Korngut eingreifen und es jeweils von unten nach oben umwälzen. Durch die umlaufende Bewegung der Umwälzeinrichtung und durch eine radiale Positionsveränderung der einzelnen Förderschnecken erreichen die Förderschnecken alle Bereiche des abgelegten Korngutes.
Nach einem ausreichenden Trocknungsprozess wird das Korngut zur Lagerung in entsprechende runde Lagersilos oder in flache Lagerhallen verbracht, wo es weiterhin ständig belüftet und/oder umgewälzt werden muss. Dadurch soll das Entstehen von Wärmenester verhindert werden.
Eine entsprechende Kornfrucht-Umwälz-Lagereinrichtung für ein rundes Lagersilo ist beispielsweise in der DE-OS 27 21 782 beschrieben. Diese Kornfrucht-Umwälz-Lagereinrichtung ist in der Mitte des Lagersilos angeordnet, fest mit dem Lagersilo verbunden und besteht im Wesentlichen aus einem Förderzylinder und einer angetriebenen Förderschnecke. Das gelagerte Korngut rutscht über einen konischen Boden in den Bereich der Förderschnecke und wird von der Förderschnecke durch den Förderzylinder in den oberen Bereich des Lagersilos befördert und wieder auf das gelagerte Korngut abgelegt. So entsteht eine umlaufende Förderbewegung.
Diese Kornfrucht-Umwälz-Lagereinrichtung ist als fester Bestandteil des Lagersilos ausgeführt und daher nur für diesen einen Einsatzfall vorgesehen. Eine Verwendung in flachen Lagerhallen ist wegen des begrenzten Wirkungsbereiches völlig ausgeschlossen, was den Einsatzbereich dieser Kornfrucht-Umwälz-Lagereinrichtung sehr stark einschränkt. Die Kornfrucht-Umwälz-Lagereinrichtung ist wegen dem notwendigen Förderzylinder auch sehr aufwendig im Aufbau und teuer in der Herstellung.

In der Regel wird das Korngut nach der Trocknung aber in großflächige Lagerhallen verbracht, wo es flach ausgeschüttet wird. Die Umwälzung geschieht hier üblicherweise durch manuelle Umschichtungen, was körperlich schwer ist und viele Arbeitskräfte bindet. Es ist auch allgemein bekannt, zur Umwälzung des Korngutes schwere Umschlagtechnik einzusetzen, die aber nicht überall vorhanden ist und obendrein sehr teuer ist. Aus der DE 35 00 881 A1 ist nun eine Bohrschnecke zum Wenden und Auflockern von Korngut in Vorratsspeichern bekannt, die im Wesentlichen aus einer Handbohrmaschine und einer in der Handbohrmaschine eingespannten Förderschnecke besteht. Die Förderschnecke besitzt dabei eine Länge, die der Höhe des geschütteten Korngutes entspricht. Zur Abstützung der Bohrschnecke gegenüber dem Siloboden ist die Spitze der Förderschnecke mit einer Kugel ausgestattet. Diese Bohrschnecke lässt sich sowohl in runden Lagersilos als auch in flachen Lagerhallen einsetzen, wobei aber der Effekt insbesondere in Lagerhallen relativ gering ist. So müssen zur Überwindung der Widerstände der sich im Korngut drehenden Förderschnecke erhebliche Körperkräfte aufgebracht werden, um die Bohrschnecke während des Betriebes in ihre Arbeitsposition zu halten und um sie örtlich fortzubewegen. Daher können diese Bohrschnecken nur über sehr kurze Zeiträume betätigt werden, was den Einsatz in flachen Lagerhallen praktisch ausschließt.
In der US-A 4 491 422 ist nun eine ähnliche Vorrichtung zum Umwälzen von Korngut aus einem unteren in einen oberen Lagerbereich bekannt, die bei einem gleichen Aufbau mit einer zusätzlichen Brakeplatte ausgerüstet, die den Massen- und Förderkräften entgegen wirkt und ein Eintauchen der Vorrichtung in das Korngut verhindert.

In der US-A 5 980 100 wird eine Vorrichtung für die Behandlung einer Flüssigkeit, beispielsweise zum Mischen oder Belüften von Abwasser, beschrieben. Diese Vorrichtung besteht aus einem Schneckenrad und einer Antriebseinheit für das Schneckenrad. Die Antriebseinheit und das Schneckenrad sind über eine Kupplungseinheit miteinander verbunden. Diese Vorrichtung soll das Abwasser im Bereich des Schneckenrades verwirbeln und in einem besonderen Anwendungsfall über die Leitung atmosphärische Luft in das Wasser eintragen.

Der Erfindung liegt daher die Aufgabe zu Grunde, eine gattungsgemäße Vorrichtung zum Umwälzen von Korngut zu entwickeln, die zeitlich unbegrenzt einsetzbar ist und zur Umwälzung keine Handkraft benötigt.
Diese Aufgabe wird durch die kennzeichnenden Merkmale des Anspruches 1 gelöst. Zweckmäßige Ausgestaltungen der Vorrichtung ergeben sich aus den Unteransprüchen 2 bis 10.

Die neue Vorrichtung mit seinen beiden Ausfuhrungsformen beseitigen die genannten Nachteile des Standes der Technik.
Dabei liegt der besondere Vorteil der Vorrichtung darin, dass die Vorrichtung vom Korngut getragen wird. Damit entfallen bei der stationären Vorrichtung alle sonst notwendigen Verbindungen oder Abstützungen mit einem Trocken- oder Lagersilo. Das macht die stationäre Vorrichtung unabhängig von der Art des Silos und erweitert damit seinen Anwendungsbereich. Die stationäre, vom Korngut getragene Vorrichtung benötigt daher auch keine ständige Bedienperson, die die Vorrichtung halten und führen muss. Das vereinfacht die Handhabung entscheidend.

Der Anwendungsbereich wird noch dadurch erweitert, dass die Vorrichtung als eine mobile Vorrichtung ausgeführt ist. Dann kann sie auch in großflächig ausgeführte Korngutschüttungen eingesetzt werden, wie es beispielsweise in Flachlager für Korngut der Fall ist. Dabei wird die mobile Vorrichtung von den in einem Füllraum auftretenden Rückstaukräften des geförderten Korngutes angetrieben. Dadurch erübrigen sich mechanische Antriebseinheiten zur Fortbewegung der Vorrichtung. Von besonderem Vorteil ist, dass sich der Füllraum der mobilen Vorrichtung leicht verschließen lässt, sodass die mobile Vorrichtung auch im stationären Betrieb eingesetzt und verwendet werden kann. Das erweitert wiederum den Einsatzbereich der Vorrichtung.

Die Erfindung soll anhand zweier Ausführungsbeispiele näher erläutert werden. Dazu zeigen:
- Fig. 1:: eine Seitenansicht einer stationären Vorrichtung mit einem nach oben offenen Auflagekörper,
- Fig. 2:: eine Draufsicht nach Fig. 1,
- Fig. 3:: eine Seitenansicht der stationären Vorrichtung mit einem nach unten offenen Auflagekörper,
- Fig. 4:: eine Seitenansicht der stationären Vorrichtung mit einem geschlossenen und hohlförmigen Auflagekörper,
- Fig. 5:: eine Seitenansicht der stationären Vorrichtung mit einem plattenförmigen Auflagekörper,
- Fig. 6:: eine Seitenansicht einer mobilen Vorrichtung,
- Fig. 7:: eine andere Seitenansicht der mobilen Vorrichtung,
- Fig. 8:: eine Draufsicht der mobilen Vorrichtung und
- Fig. 9:: eine Seitenansicht der mobilen Vorrichtung mit einer speziellen Förderschnecke.

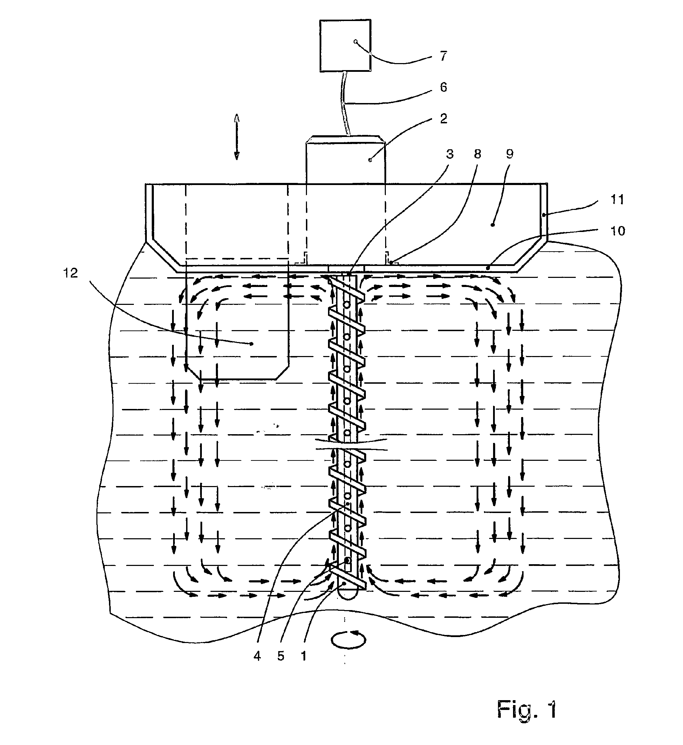

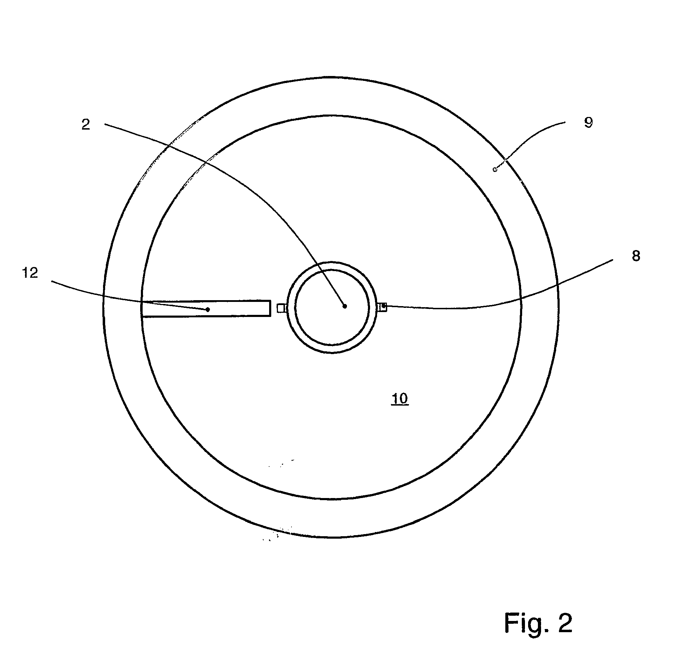

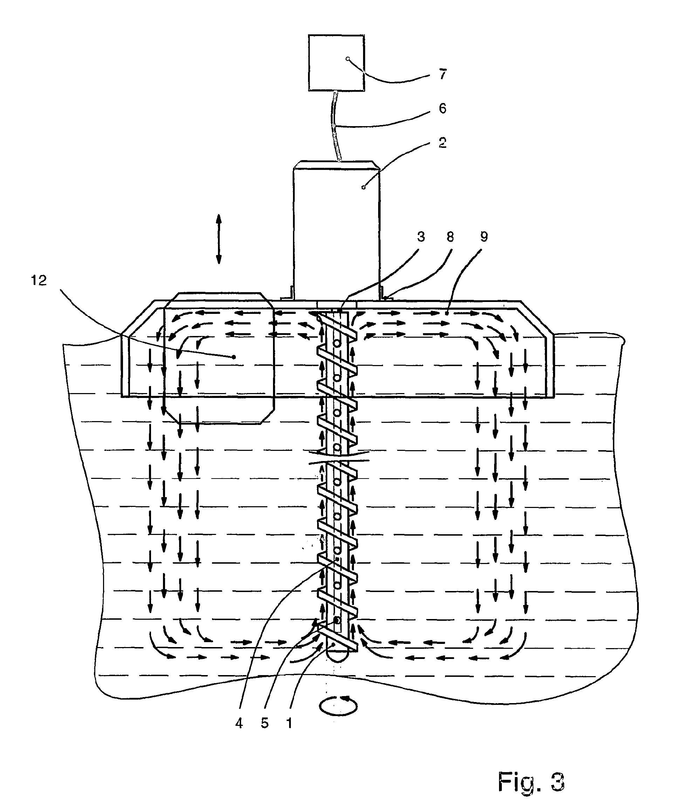

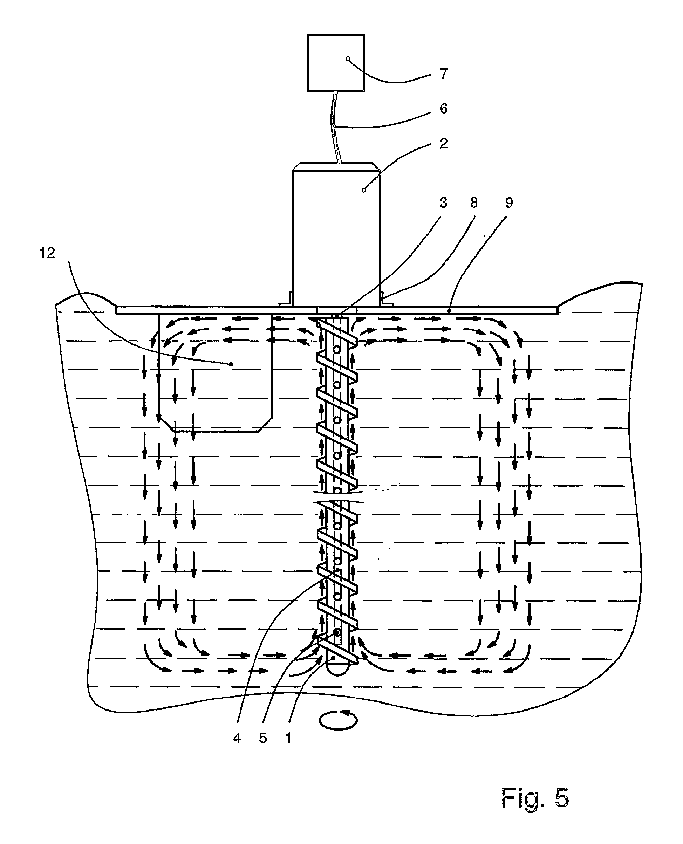

Die stationäre Vorrichtung zum Umwälzen von Korngut gemäß der Fig. 1 bis 5 besteht in der Hauptsache aus einer Förderschnecke 1 und einer Antriebseinheit 2 für die Förderschnecke 1. Die Förderschnecke 1 und die Antriebseinheit 2 sind durch eine Kupplungseinheit 3 lösbar miteinander verbunden, sodass je nach dem Einsatzfall eine Förderschnecke 1 mit einer ausgewählten Länge eingesetzt werden kann. Die Förderschnecke 1 besitzt vorzugsweise einen inneren Führungskanal 4 mit radialen Austrittsöffnungen 5, die über einen Versorgungsschlauch 6 mit einer Luft- oder Flüssigkeitsversorgungseinheit 7 in Verbindung stehen. Die Antriebseinheit 2 wird vorzugsweise elektrisch betrieben und ist über Befestigungselemente 8 starr mit einem Auflagekörper 9 verbunden.
Nach den Fig. 1 und 2 ist der Auflagekörper 9 topfförmig ausgebildet und besitzt daher eine Bodenplatte 10 und eine umlaufende Wandung 11. Dabei kann die Bodenplatte 10 rund, vieleckig oder stromlinienförmig ausgebildet sein. Die offene Seite des topfförmigen Auflagekörpers 9 befindet sich oben. Die Bodenplatte 10 ist rechtwinklig zur Achse der Förderschnecke 1 ausgerichtet und besitzt eine Größe, die auf die Förderleistung der Förderschnecke 1 abgestimmt ist. Dabei ist die Größe der Bodenplatte 10 so gewählt, dass die tragenden Kräfte des Auflagekörpers 9 die Vorrichtung an der Oberfläche des Korngutes halten. Auf Grund der Ausrichtung der offenen Seite des topfförmigen Auflagekörpers 9 nach oben ist die Antriebseinheit 2 in den Auflagekörper 9 eingesetzt und an der Bodenplatte 10 befestigt.
Die Bodenplatte 10 besitzt weiterhin eine Hemmplatte 12, die parallel zur Achse der Förderschnecke 1 angeordnet und radial zur Achse der Förderschnecke 1 ausgerichtet ist. Dabei besitzt die Hemmplatte 12 eine Flächengröße, die auf die Größe des Drehmomentes an der Förderschnecke 1 abgestimmt ist. Die Hemmplatte 12 ist vorzugsweise höhenverstellbar und in unterschiedliche Stellungen arretierbar in der Bodenplatte 10 angeordnet, um eine Einstellung auf die anwendungsbezogene Größe des Drehmomentes an der Förderschnecke 1 zu ermöglichen.
Die Fig, 3 zeigt eine gleiche Vorrichtung mit einem ebenfalls topfförmig ausgebildeten Auflagekörper 9, der allerdings mit seiner offenen Seite nach unten ausgerichtet ist.
Auch hier ist die Hemmplatte 12 verschiebbar und arretierbar ausgeführt.

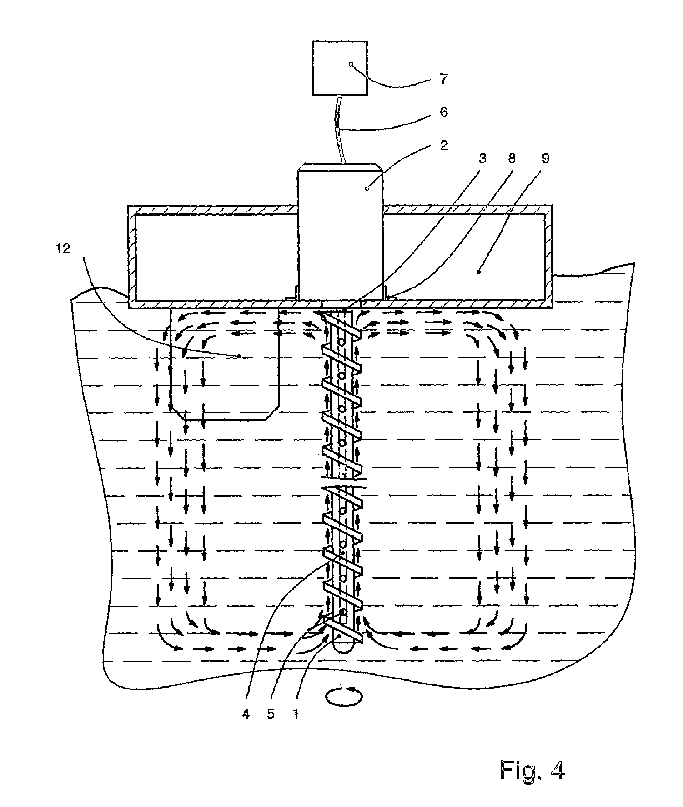

In der Fig. 4 wird eine Vorrichtung zum Umwälzen von Korngut vorgestellt, die wiederum aus einer Förderschnecke 1, einer Antriebseinheit 2 und einem Auflagekörper 9 besteht, wobei der Aufnahmekörper 9 als ein geschlossener Hohlkörper ausgeführt ist. Durch die zusätzlich wirkenden Auftriebskräfte der im Inneren des Hohlkörpers eingeschlossenen Luft kann der Aufnahmekörper 9 in seiner radialen Ausdehnung kleiner ausgeführt sein. Die Hemmplatte 12 ist starr an der unteren Seite des hohlförmigen Auflagekörpers 9 befestigt. Vorzugsweise ist die Hemmplatte 12 mit dem Auflagekörper 9 verschweißt.
Gemäß der Fig. 5 ist der Aufnahmekörper 9 der Vorrichtung zum Umwälzen von Korngut plattenförmig ausgebildet, an deren Unterseite wiederum die Hemmplatte 12 angeschweißt ist.

Die Wirkungsweise der stationären Ausführungsform der Vorrichtung zum Umwälzen von Korngut ist relativ einfach und daher leicht aus den zeichnerischen Darstellungen der Fig. 1 bis 5 zu entnehmen.
Die Vorrichtung wird mit der Förderschnecke 1 horizontal auf das Korngut aufgelegt, wobei das freie Ende der Förderschnecke 1 Kontakt mit dem Korngut bekommt. Danach wird die Antriebseinheit 2 angeschaltet, sodass die Förderschnecke 1 sich in das Korngut eingräbt. Dabei ist die Förderschnecke 1 bestrebt, sich in die Vertikale auszurichten. Das Eingraben ist dann beendet, wenn der Auflagekörper 9 auf das Korngut vollflächig aufliegt. Jetzt beginnt die Förderung des Korngutes, in dem das in den Gewindegängen der Förderschnecke 1 befindliche Korngut entlang der Gewindegänge nach oben geschoben und an der Oberfläche des Korngutes abgelegt wird. Dabei wird immer nur in den untersten Gewindegängen neues Korngut aufgenommen, weil in den höheren Gewindegängen kein freier Raum mehr zur Aufnahme weiteren Korngutes vorhanden ist. Dadurch wird stets das zu unterste Korngut bis an die Oberfläche transportiert, während die Zwischenschichten lediglich in die unteren und frei gewordenen Hohlräume nachrutschen. Durch die untere Entnahme und die obere Ablage des Korngutes sowie durch das Nachrutschen des nicht beförderten Korngutes entsteht innerhalb des abgelegten Korngutes ein Umlauf, der wärmere Kornschichten nach oben und kühlere Kornschichten nach unter verlagert. Da keine radialen Kräfte auf die Vorrichtung einwirken, verbleibt die Vorrichtung während des Betriebes stets am gleichen Ort, und die Vorrichtung verbleibt auch in ihrer ruhenden Stellung, da die von der drehenden Bewegung der Förderschnecke 1 ausgehenden Umfangskräfte von der in das Korngut eingetauchten Hemmplatte 12 aufgenommen werden. Es dreht sich also nur die Förderschnecke 1 und die Vorrichtung verbleibt am Einsatzort.
In besonderer Weise kann in diesem Umwälzprozess warme oder kalte Luft oder Flüssigkeiten aus der Luft- oder Flüssigkeitsversorgungseinheit 7 über den Versorgungsschlauch 6, dem Führungskanal 4 und den radialen Austrittsöffnungen 5 beigegeben werden. Mit der Luftversorgung wird das Korngut zusätzlich getrocknet oder gekühlt und mit einer entsprechenden Flüssigkeit werden im Korngut befindliche Insekten bekämpft oder die Haltbarkeit zum Beispiel von Futtergetreide verbessert.

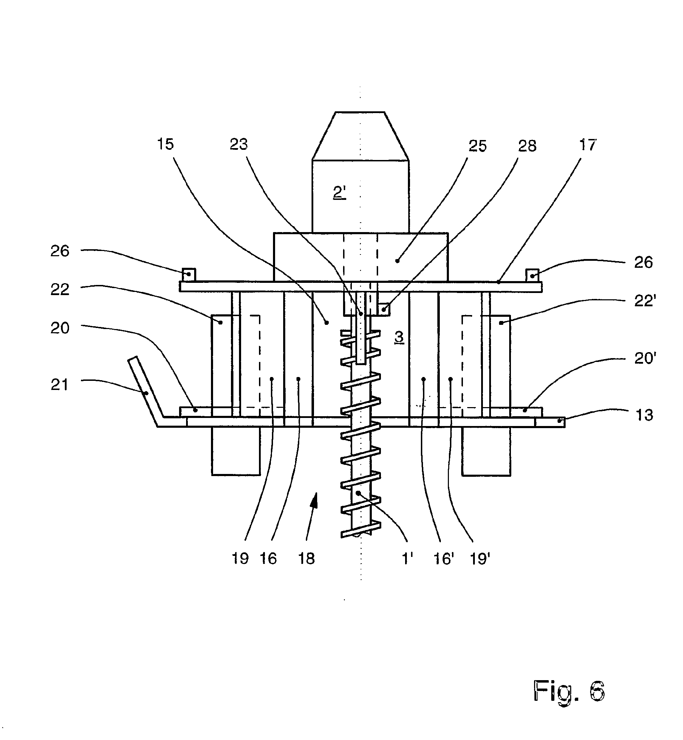

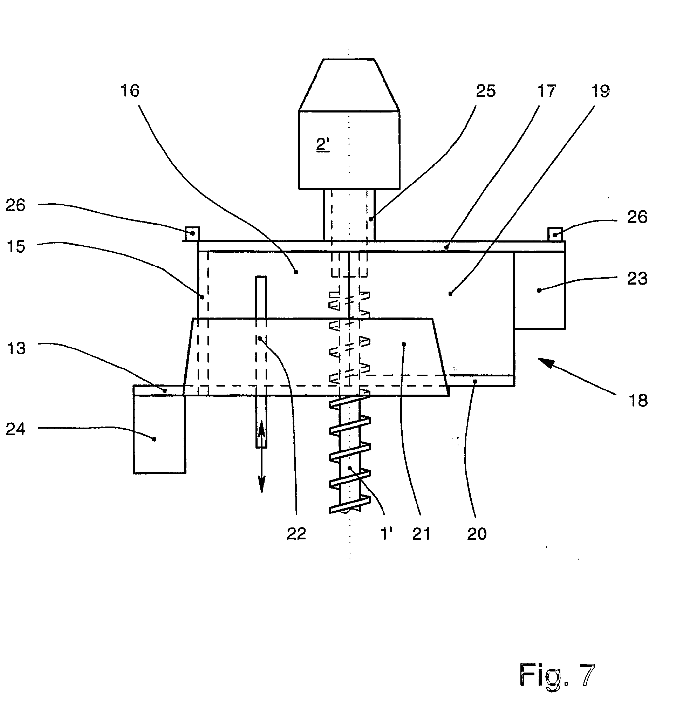

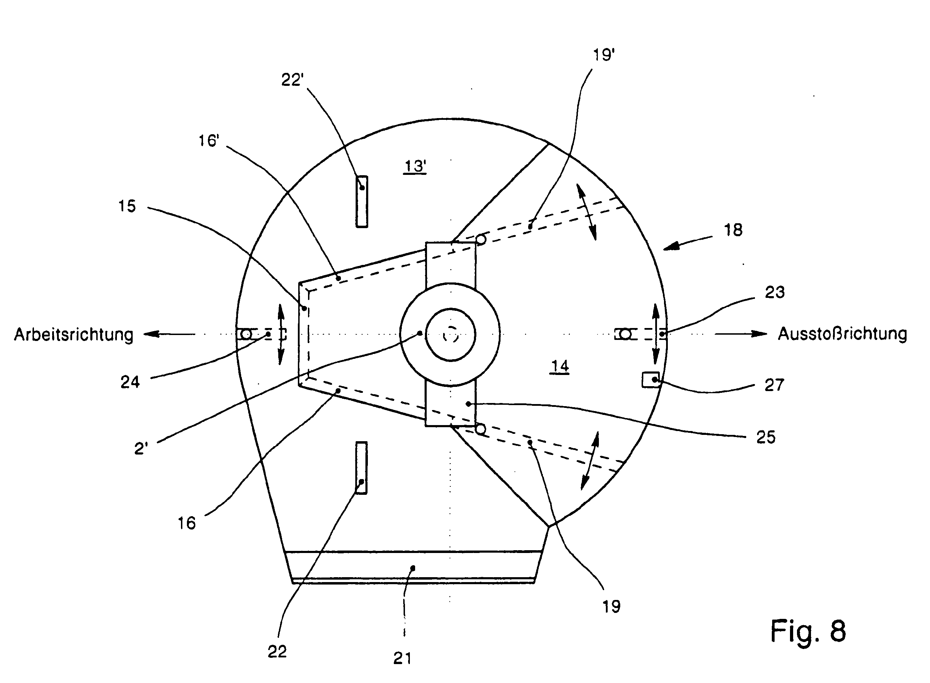

Die mobile Vorrichtung zum Umwälzen von Korngut gemäß der Fig. 6 bis 9 ist insbesondere für ein Flachlager geeignet und besteht aus einer bodenseitigen Auflageplatte 13 und der bereits aus der ersten Ausführungsform bekannten Förderschnecke 1'. Diese Förderschnecke 1' verläuft mittig durch die bodenseitige Auflageplatte 13 und ist dabei senkrecht oder mit einer solchen Neigung zur Auflageplatte 13 ausgerichtet, dass sich die Auflageplatte 13 im vorderen Bereich durch die in die Senkrechte strebende Förderschnecke 1' aufrichtet. Die Neigung kann einstellbar sein.
Die bodenseitige Auflageplatte 13 weist eine kreisrunde Fläche mit einem offenen trapezförmigen Flächensegment auf. Oberhalb des offenen Flächensegmentes der bodenseitigen Auflageplatte 1 bildet sich ein Füllraum 14 aus. Dieser besitzt eine dem offenen trapezförmigen Flächensegment der bodenseitigen Auflageplatte 13 entsprechende prismatische Form. Begrenzt wird der Füllraum 14 durch eine Stirnwand 15, zwei Seitenwände 16, 16' und eine deckelseitige Auflageplatte 17. Dabei sind sowohl die Stirnwand 15 als auch die Seitenwände 16, 16' senkrecht auf der bodenseitigen Auflageplatte 13 sowie die deckelseitige Auflageplatte 17 parallel zu der bodenseitigen Auflageplatte 13 ausgerichtet. Der Füllraum 14 bildet, der Stirnwand 15 gegenüberliegend, von der deckelseitigen Auflageplatte 17 abgedeckt und von den Seitenwänden 16,16' flankiert, einen sich in horizontaler Richtung öffnenden Ausstoßbereich 18 auf. Dabei sind die Seitenwände 16, 16' auf der Seite, die der Stirnwand 15 abgewandt und dem Ausstoßbereich 18 zugewandt ist, um eine senkrechte Drehachse schwenkbar ausgeführt. Dadurch sind die Seitenwände 16, 16' in einen feststehenden und einen schwenkbaren Bereich 19, 19' unterteilt. In einer zueinander orientierten Stellung geben die schwenkbaren Bereiche 19, 19' der Seitenwände 16, 16' einen minimalen Ausstoßbereich 18 und in einer voneinander weg orientierten Stellung geben die schwenkbaren Bereiche 19, 19' der Seitenwände 16, 16' einen maximalen Ausstoßbereich 18 frei. Dabei können eine oder beide schwenkbaren Bereiche 19, 19' so ausgelegt sein, dass sie den Füllraum 14 verschließen. Damit wird ein Ausstoß von Korngut verhindert und ein Antrieb der Vorrichtung während der Umwälzung unterbunden. An den schwenkbaren Bereichen 19, 19' der Seitenwände 16, 16' ist jeweils eine horizontal und direkt oberhalb der bodenseitigen Auflageplatte 13 angeordnete Zusatzauflage 20, 20' befestigt. Diese weist jeweils eine solche Größe und Form auf, dass sie den Füllraum 14 nach unten abschließt, sobald die schwenkbaren Bereiche 19, 19' der Seitenwände 16, 16' gegeneinander geschwenkt werden und den Füllraum 14 und den Ausstoßbereich 18 verkleinern oder verschließen. Sowohl das offene Flächensegment in der bodenseitigen Auflageplatte 13 als auch die deckelseitige Auflageplatte 17 weisen eine auf das maximale Füllvolumen abgestimmte Größe auf.
Es steht dem Fachmann frei, die bodenseitige Auflageplatte 13 und die deckelseitige Auflageplatte 17 nach den Vorbildern des Auflagekörpers 9 der stationären Vorrichtung auszuführen und darin den für den Antrieb erforderlichen Füllraum zu integrieren.
Die bodenseitige Auflageplatte 13 weist zudem auf einer Seite eine hochgezogene Führungsplatte 21 auf. Dabei ist die Führungsplatte 21 parallel zur Arbeitsrichtung der Vorrichtung ausgerichtet. Dabei ist die Führungsplatte 21 in ihrer Größe und in ihrer Ausrichtung so ausgelegt, dass sie sich gegen einen bereits aufgeworfenen Korngutwall abstützen kann. Die Größe, die Form und der Anstellwinkel der Führungsplatte 21 sind entsprechend abgestimmt. Dem Fachmann soll es dabei freistehen, eine oder mehrere zusätzliche Führungsplatten 21 vorzusehen.
Die bodenseitige Auflageplatte 13 durchdringen zwei höhenverstellbare Hemmplatten 22, 22'. Diese sind jeweils seitlich außerhalb des Füllraumes 14 angebracht und weisen eine auf die Hemmung der Drehung der Vorrichtung angepasste Größe und Form auf. Die Höhenverstellung der Hemmplatten 22, 22' kann unabhängig voneinander von Hand oder auch automatisch anhand bestimmter Parameter motorisch erfolgen. Innerhalb des Füllraumes 14, den Ausstoßbereich 18 mittig teilend, ist an der deckelseitigen Auflageplatte 17 eine hintere, in das Korngut eintauchende Steuereinrichtung 23 befestigt, die um eine senkrechte Drehachse schwenkbar ist. Die Größe der wirksamen Fläche der hinteren Steuereinrichtung 23 ist auf die Steuerung der Vorrichtung entsprechend abgestimmt. In gleicher Linie mit der hinteren Steuereinrichtung 23, und dieser gegenüberliegend, ist unterhalb der bodenseitigen Auflageplatte 13 eine vordere, ebenfalls in das Korngut eintauchende Steuereinrichtung 24 angebracht, die gleichfalls um eine senkrechte Drehachse schwenkbar ist. Die Größe der wirksamen Fläche der vorderen Steuereinrichtung 24 entspricht etwa der der hinteren Steuereinrichtung 23. Sowohl die vordere Steuereinrichtung 24 als auch die hintere Steuereinrichtung 23 werden zur Richtungssteuerung eingesetzt und können unabhängig voneinander von Hand oder auch automatisch anhand bestimmter Parameter motorisch verstellt werden. Sowohl der Einsatz der Hemmplatten 22, 22', der Einsatz der hinteren Steuereinrichtung 23 als auch der vorderen Steuereinrichtung 24 ist optional.
Die Förderschnecke 1' ist drehfest mit der Antriebseinheit 2' verbunden, wobei die Antriebseinheit 2' über eine Aufnahme 25 an der deckelseitigen Auflageplatte 17 befestigt ist. Die Antriebseinheit 2' kann sowohl mittels Elektroenergie antreibbar oder als Verbrennungskraftmaschine ausgelegt sein. Abtriebsseitig beträgt die Drehzahl etwa 250 bis 750 min⁻¹.
Die Förderschnecke 1' ist handelsüblich und weist einen Schneckendurchmesser von etwa 50 bis 100 mm auf. Sowohl der Durchmesser und die Steigung der Förderschnecke 1' als auch die Drehzahl der Förderschnecke 1' sind auf die Menge des zu fördernden Korngutes abstimmbar. Die Länge der Förderschnecke 1' ist gleichfalls variabel und beträgt etwa zwischen 1.000 und 4.000 mm, wobei deren unteres Ende in einen Stapel Korngut hineinragt.

In Anlehnung an die stationäre Vorrichtung gemäß der Fig. 1 bis 5 kann die Förderschnecke 1' wieder als Hohlwelle gestaltet sein, die mit der Luft- oder Flüssigkeitsversorgungseinheit 7 in Verbindung steht.
Nach der Fig. 6 kann die Förderschnecke 1' in dem Bereich des Füllraumes 14 ein exzentrisch befestigtes Gewicht aufweisen, so dass mit der Drehzahl der Förderschnecke 1' diese zusätzlich translatorische Impulse erzeugt. Dabei ist eine entsprechende Unwucht 28 so auf der Förderschnecke 1' befestigt sein, dass die translatorischen Impulse senkrecht sowohl zu der Stirnwand 15 als auch zu dem Ausstoßbereich 18 wirken.

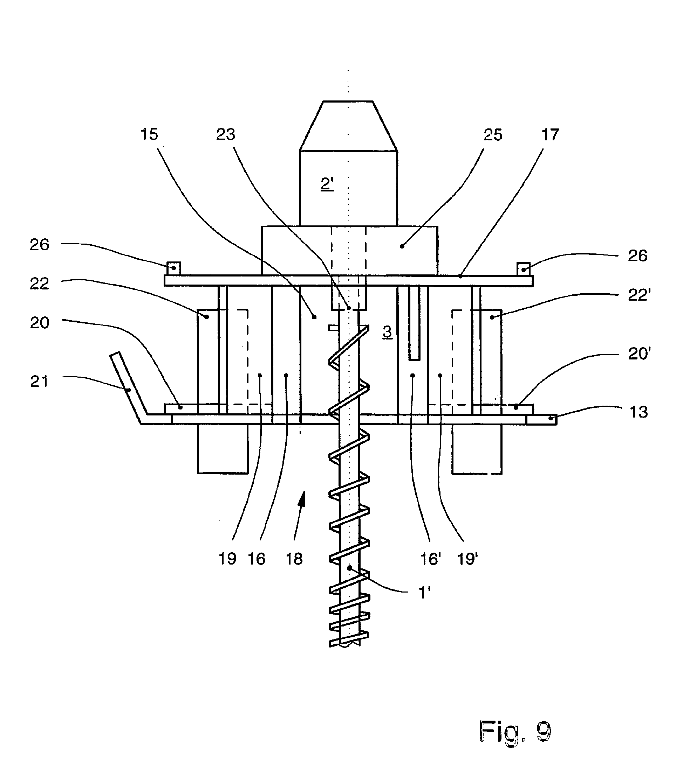

In der Fig. 9 wird eine Förderschnecke 1' vorgestellt, die eine zur Antriebsseite hin kontinuierlich zunehmende Steigung besitzt. Damit bilden sich unterschiedliche Förderräume zwischen den Zahnflanken aus, die in Richtung zur Antriebseinheit 2' größer werden. Dadurch wird Korngut nicht nur aus den unteren Regionen, sondern aus allen, die Förderschnecke 1' umgebenden Höhenschichten der Korngutschüttung aufgenommen. Durch die Entnahme von Korngut über die gesamte Länge der Förderschnecke 1' verringert sich der seitliche, auf die Förderschnecke 1' wirkende Widerstand des Korngutes. Das erleichtert der Förderschnecke 1' die Transportbewegung durch das Korngut. Die Vorrichtung ist vorzugsweise im Bereich der deckelseitigen Auflageplatte 17 mit seitlichen, vorderen und hinteren Kupplungseinheiten 26 ausgestattet, die über entsprechende Abstandshalter eine Koppelung von mehreren mobilen Vorrichtungen ermöglichen. Damit kann eine Formation von mehreren Vorrichtungen zusammengestellt werden, die eine größere Fläche des Korngutes erfassen. Eine solche Formation kann beispielsweise aus zwei oder mehr Reihen von nebeneinander angeordneten Vorrichtungen bestehen, die sich obendrein auf Lücke zueinander orientieren. Dabei kann eine Richtungsänderung der Formation so gesteuert werden, dass die Förderleistung der Förderschnecke 1' und damit die Antriebsgeschwindigkeit einer oder mehreren außen liegenden Vorrichtungen ausgeschaltet oder verringert werden, sodass die abgeschalteten oder gedrosselten Vorrichtungen zur Drehachse für die gesamte Formation der Vorrichtungen werden.

Die mobile Vorrichtung ist obendrein in seinem hinteren Bereich mit einem Temperatursensor 27 ausgerüstet, der die Temperatur des ausgeworfenen Korngutes misst und danach über entsprechende Steuerelemente die Antriebsgeschwindigkeit der Vorrichtung bestimmt. Weist das geförderte Korngut eine höhere Temperatur auf, dann wird die Antriebsgeschwindigkeit gedrosselt, ist die Temperatur des geförderten Korngutes geringer, dann wird die Antriebsgeschwindigkeit erhöht. Damit können Wärmenester effektiver bearbeitet werden.

Im Folgenden soll die Wirkungsweise der mobilen Vorrichtung in einem diskontinuierlichen Betrieb in einem mit Korngut gefüllten Flachlager bei der Bekämpfung eines Wärmenestes beschrieben werden. Dazu wird die Vorrichtung auf der Oberfläche des Korngutes an die zuvor detektierte Stelle verbracht, an der sich in 1 bis 2 Meter Tiefe unterhalb der Oberfläche das Wärmenest befindet. Dabei ist es zweckmäßig, wenn die Vorrichtung selbst und die Förderschnecke 1' auf Grund ihrer Länge separat transportiert werden. Danach wird das obere Ende der Förderschnecke 1' drehfest mit der Abtriebsseite der Antriebseinheit 2' verbunden und flach auf das Korngut abgelegt. Dann wird die Antriebseinheit 2' eingeschaltet, wodurch sich die Förderschnecke 1' selbstständig in das Korngut eingräbt und sich dabei aus der horizontalen in die vertikale Lage abgesenkt. Die Förderschnecke 1' fördert, entsprechend der Drehzahl, des Durchmessers und der Steigung, Korngut in den Füllraum 14. Nach Erreichen des maximalen Füllvolumens in dem Füllraum 14 entsteht ein entsprechender Fülldruck, der sich, abgestützt an der Stirnwand 15 und an den Seitenwänden 16, 16' in Richtung des Ausstoßbereiches 18 entlädt, so dass durch die weitere Förderung das Korngut aus dem Ausstoßraum 18 herausgedrückt wird. Das Ausströmen des Korngutes aus dem Füllraum 14 in die Richtung des Ausstoßraumes 18 erzeugt auch eine entgegengesetzt gerichtete Kraft, die auf die Stirnwand des Füllraumes 14 wirkt und die die gesamte Vorrichtung in eine Arbeitsrichtung verschiebt. Dadurch bewegt sich die Vorrichtung, auf dem Korngut aufliegend, in die Arbeitsrichtung, wobei gleichzeitig das aus dem Bereich des Wärmenestes geförderte Korngut aus dem Füllraum 14 ausgestoßen und in einem sich bildenden Korngutwall abgelegt wird. Bedingt durch die Länge der Förderschnecke 1' leitet diese und auch die Antriebseinheit 2' selbst impulsartige Vibrationen in die Vorrichtung ein, die deren Bewegung in der Arbeitsrichtung fördern. Die Vorrichtung kann in ihrer Bewegungsrichtung zusätzlich zu den Steuereinrichtungen 23 und 24 leicht durch eine Bedienperson durch Schieben oder Drehen in die eine oder andere Richtung beeinflusst werden.

Die mobile Vorrichtung ist aber auch in einem kontinuierlichen Betrieb in einem mit Korngut befüllten Flachlager zur Vermischung von Korngut während des Trocknungsprozesses einsetzbar. Dazu wird die Vorrichtung von einer Bedienperson in einem ersten Durchlauf so ausgerichtet, dass das ausgeworfene Korngut einen geraden und in der Mitte der Lagerfläche ausgerichteten Wall erzeugt. Anschließend wird die Vorrichtung so ausgerichtet, dass sie mit ihrer Führungsplatte 21 zur Anlage mit dem aufgeworfenen Wall kommt. In den nachfolgenden Umläufen stützt sich die Vorrichtung mittels der Führungsplatte 21 unter Nutzung des Drehmomentes in Richtung der Führungsplatte 21 entsprechend an dem zuletzt erzeugten Korngutwall ab und wird so entlang des ausgeworfenen Walls geführt. Am Ende einer jeden Strecke wird von einer Bedienperson die Vorrichtung in die entgegengesetzte Richtung umgesetzt. So wird kontinuierlich die gesamte Fläche der Lagerhalle bearbeitet.
Der kontinuierliche Betrieb der mobilen Vorrichtung ist auch automatisch realisierbar. Dazu ist die Vorrichtung mit entsprechenden Sendern, Sensoren und Stellantrieben ausgerüstet und mit einer abgestimmten datenverarbeitenden Maschine verbunden. Die Vorrichtung sendet in entsprechenden zeitlichen Abständen ihre aktuellen räumlichen x-, , y- und gegebenenfalls z-Koordinaten an die datenverarbeitende Maschine, die die Koordinaten in einem entsprechenden Programm verarbeitet. Die datenverarbeitende Maschine sendet dann wiederum der Vorrichtung ihrerseits Parameter, mit denen beispielsweise die Hemmplatten 22, 22', die hintere Steuereinrichtung 23 und/oder die vordere Steuereinrichtung 24 verstellt werden. Der automatische Betrieb der erfindungsgemäßen Vorrichtung ist dahingehend optimierbar, dass entsprechend installierte Sensoren ein Wärmenest innerhalb des Getreidestapels detektieren, die x-, y- und z-Koordinaten des Wärmenestes an die datenverarbeitende Maschine senden, wonach diese die Vorrichtung gezielt durch das Flachlager zu dem Wärmenest führt. Die Sensoren zur Ermittlung von Wärmenestern können Temperaturmess-, Dichtemess-, Sauerstoffgehaltmess- oder Kohlendioxidgehaltmess-Sensoren sein.

### Liste der Bezugszeichen

- 1: Förderschnecke
- 2: Antriebseinheit
- 3: Kupplungseinheit
- 4: Führungskanal
- 5: radiale Austrittsöffnung
- 6: Versorgungsschlauch
- 7: Luft- oder Flüssigkeitsversorgungseinheit
- 8: Befestigungselement
- 9: Auflagekörper
- 10: Bodenplatte
- 11: Wandung
- 12: Hemmplatte
- 13: bodenseitige Auflageplatte
- 14: Füllraum
- 15: Stirnwand
- 16: Seitenwand
- 17: deckelseitige Auflageplatte
- 18: Ausstoßbereich des Füllraumes
- 19: schwenkbarer Bereich der Seitenwand
- 20: Zusatzauflage des schwenkbaren Bereichs der Seitenwand
- 21: Führungsplatte
- 22: Hemmplatte
- 23: hintere Steuereinrichtung
- 24: vordere Steuereinrichtung
- 25: Aufnahme für die Antriebseinheit
- 26: Kupplungseinheit
- 27: Temperatursensor
- 28: Unwucht

## Patentansprüche

1. Vorrichtung zum Umwälzen von Korngut aus einem unteren in einen oberen Lagerbereich, bestehend aus einer Förderschnecke (1, 1') Für das Korngut und einer die Förderschnecke (1, 1') antreibenden Antriebseinheit (2), die beide über eine Kupplungseinheit (3) miteinander verbunden sind, wobei die Antriebseinheit (2) drehfest mit einem Auflagekörper (9) verbunden ist, der mit seiner unteren Auflagefläche winklig zur Achse der Förderschnecke (1, 1') ausgerichtet ist und der eine der Förderleistung der Förderschnecke (1, 1') widerstehende Flächengröße besitzt und der mit mindestens einer in das Korngut eintauchenden Hemmplatte (12, 22, 22') ausgerüstet ist, wobei die Hemmplatte (12, 22, 22') eine den Umfangskräften der drehenden Förderschnecke (1, 1') widerstehende Flächengröße besitzt,
**dadurch gekennzeichnet, dass** die Förderschnecke (1, 1') eine größere Länge als die Eintauchtiefe der Hemmplatte (12, 22, 22') besitzt und in ihrer Form und in ihren Abmessungen so ausgelegt ist, dass ein Umwälzen des Korngut aus einem untersten in einen obersten Lagerbereich ermöglicht wird.

2. Vorrichtung nach Anspruch 1,
**dadurch gekennzeichnet, dass** der Auflagekörper (9) topfförmig mit einer beliebig geformten Auflagefläche ausgebildet ist und mit seiner offenen Seite der Förderschnecke (1) abgewandt ist.

3. Vorrichtung nach Anspruch 1,
**dadurch gekennzeichnet, dass** der Auflagekörper (9) topfförmig mit einer beliebig geformten Auflagefläche ausgebildet ist und mit seiner offenen Seite der Förderschnecke (1) zugewandt ist.

4. Vorrichtung nach einem der Ansprüche 1 bis 3,
**dadurch gekennzeichnet, dass** der Auflagekörper (9) mit einem Füllraum (14) für das geförderte Korngut ausgestattet ist und der Füllraum (14) einen seitlichen Ausstoßbereich (18) zur Ablage des geförderten Korngutes auf die Korngutschüttung besitzt, wobei die Größe des Füllraumes (14) und die Größe des Ausstoßbereiches (18) so aufeinander abgestimmt sind, dass innerhalb des Füllraumes (14) ein vom geförderten Korngut ausgehender und für einen Transportantrieb ausreichender Druck auf die Vorrichtung ausgeübt wird.

5. Vorrichtung nach Anspruch 4,
**dadurch gekennzeichnet, dass** der Füllraum (14) zur Regulierung der Antriebsgeschwindigkeit der Vorrichtung im Bereich seines Ausstoßbereiches (18) mit einer Einrichtung zur Verstellung des Öffnungsquerschnittes des Ausstoßbereiches (18) im Bereich von "voll geöffnet" bis "geschlossen" ausgestattet ist.

6. Vorrichtung nach Anspruch 4,
**dadurch gekennzeichnet, dass** die Förderschnecke (1') zum Auflagekörper (9) einen solchen möglichst verstellbaren Neigungswinkel aufweist, dass sich der Auflagekörper (9) mit seiner Vorderfront bei einer vertikalen Ausrichtung der Förderschnecke (1') aus der Korngutschüttung erhebt.

7. Vorrichtung nach Anspruch 4,
**dadurch gekennzeichnet, dass** die Förderschnecke (1') für den Aufnahmekörper (9) eine Steigung besitzt, die in Richtung zur Antriebseinheit (2') zunimmt.

8. Vorrichtung nach Anspruch 4,
**dadurch gekennzeichnet, dass** der Auflagekörper (9) Kupplungseinheiten (26) besitzt, mit denen mehrere Vorrichtungen zu einer den Arbeitsbereich vergrößernden Formation zusammengestellt werden.

9. Vorrichtung nach Anspruch 4,
**dadurch gekennzeichnet, dass** der Auflagekörper (9) einen Temperatursensor (27) zur Erfassung der Temperatur des geförderten Korngutes besitzt und der Temperatursensor (27) mit Verstelleinrichtungen zur Regulierung der Transportgeschwindigkeit der Vorrichtung verbunden ist.

10. Vorrichtung nach den Ansprüchen 1 oder 4,
**dadurch gekennzeichnet, dass** die Förderschnecke (1, 1') einen axialen Führungskanal (4) und radiale Austrittsöffnungen (5) besitzt, die mit einer Luft- oder Flüssigkeitsversorgungsanlage (7) in Verbindung stehen.

## Claims

1. Device for circulating grain material from a lower into an upper storage region, said device consisting of a conveyer screw (1, 1') for the grain material and a driving unit (2) driving said conveyer screw (1, 1'), which screw and unit are connected to one another via a coupling unit (3), wherein said driving unit (2) is connected in a torsion-proof manner to a bearing member (9) which is oriented with its lower bearing surface at an angle to the axis of the conveyer screw (1, 1'), possesses a size of surface that resists the conveying capacity of said conveyer screw (1, 1'), and is equipped with at least one inhibiting plate (12, 22, 22') which penetrates into the grain material, and wherein said inhibiting plate (2, 22, 22') possesses a size of surface that resists the peripheral forces of the rotating conveyer screw (1, 1'),
**characterised in that** the conveyer screw (1, 1') possesses a greater length than the depth of penetration of the inhibiting plate (2, 22, 22') and is designed, in its shape and dimensions, in such a way that circulation of the grain material from a lowermost into an uppermost storage region is made possible.

2. Device according to Claim 1,
**characterised in that** the bearing member (9) is of pot-shaped construction with a bearing surface of any desired shape and faces, with its open side, away from the conveyer screw (1).

3. Device according to Claim 1,
**characterised in that** the bearing member (9) is of pot-shaped construction with a bearing surface of any desired shape and faces, with its open side, towards the conveyer screw (1).

4. Device according to one of Claims 1 to 3,
**characterised in that** the bearing member (9) is equipped with a filling chamber (14) for the grain material conveyed and said filling chamber (14) possesses a lateral ejecting region (18) for depositing the grain material conveyed onto the embankment of grain material, the size of the filling chamber (14) and the size of the ejecting region (18) being coordinated with one another in such a way that a pressure, which emanates from the grain material conveyed and is adequate for a transporting drive, is exerted on the device within said filling chamber (18) .

5. Device according to Claim 4,
**characterised in that**, for the purpose of regulating the driving speed of the device, the filling chamber (18) is equipped, in the region of its ejecting region (18), with an apparatus for adjusting the cross-section of opening of said ejecting region (18) within the range from "fully open" to "closed".

6. Device according to Claim 4,
**characterised in that** the conveyer screw (1') has an angle of inclination, relative to the bearing member (9), which is adjustable to the greatest possible extent and which is such that said bearing member (9) is lifted out of the embankment of grain material with its front when the conveyer screw (1) is oriented vertically.

7. Device according to Claim 4,
**characterised in that** the conveyer screw (1') for the bearing member (9) possesses a pitch which increases in the direction towards the driving unit (2').

8. Device according to Claim 4,
**characterised in that** the bearing member (9) possesses coupling units (26) by means of which a number of devices are combined to form a system which increases the working capacity.

9. Device according to Claim 4,
**characterised in that** the bearing member (9) possesses a temperature sensor (27) for detecting the temperature of the grain material conveyed, and said temperature sensor (27) is connected to adjusting apparatuses for regulating the speed of transport of the device.

10. Device according to one of Claims 1 or 4,
**characterised in that** the bearing member (1, 1') possesses an axial guide conduit (4) and radial outlet apertures (5) which are in communication with an air-supplying or liquid-supplying installation (7).

## Revendications

1. Dispositif pour faire circuler une matière en grains à partir d'une zone de stockage inférieure vers une zone de stockage supérieure, composé d'une vis de transfert (1, 1') pour la matière en grains et d'une unité d'entraînement (2) qui entraîne la vis de transfert (1, 1'), ces deux éléments étant reliés par une unité de couplage (3),
l'unité d'entraînement (2) étant solidaire en rotation d'un organe d'appui (9) dont la surface d'appui inférieure fait un angle par rapport à l'axe de la vis de transfert (1, 1') et dont la dimension de la surface lui permet de résister au débit de la vis de transfert (1, 1'), cet organe étant également équipé d'au moins une plaque d'arrêt (12, 22, 22') immergée dans la matière en grains,
la plaque d'arrêt (12, 22, 22') ayant une taille de surface s'opposant aux forces périphériques exercées par la vis de transfert (1, 1') en rotation,
**caractérisé en ce que**
la vis de transfert (1, 1') a une longueur supérieure à la profondeur d'immersion de la plaque d'arrêt (12, 22, 22') et sa forme et ses dimensions sont conçues pour permettre la mise en circulation de la matière en grains à partir de la zone de stockage la plus basse jusque dans la zone de stockage la plus haute.

2. Dispositif selon la revendication 1,
**caractérisé en ce que**
l'organe d'appui (9) est réalisé avec une forme de pot ayant une surface d'appui de forme quelconque et dont le côté ouvert n'est pas tourné vers la vis de transfert (1).

3. Dispositif selon la revendication 1,
**caractérisé en ce que**
l'organe d'appui (9) en forme de pot a une surface d'appui de forme quelconque et son côté ouvert est tourné vers la vis de transfert (1).

4. Dispositif selon l'une des revendications 1 à 3,
**caractérisé en ce que**
l'organe d'appui (9) est équipé d'une chambre de remplissage (14) pour la matière en grains, transférée, et la chambre de remplissage (14) a une zone de sortie latérale (18) pour déposer la matière en grains, débitée sur un déversoir, la taille de la chambre de remplissage (14) et celle de la zone d'éjection (18) étant définies l'une par rapport à l'autre pour qu'à l'intérieur de la chambre de remplissage (14), une poussée s'exerce sur le dispositif à partir de la matière en grains, débitée, et qui est suffisante pour assurer le transport.

5. Dispositif selon la revendication 4,
**caractérisé en ce que**
la chambre de remplissage (14) est équipée d'une installation de réglage de la section d'ouverture de la zone d'éjection (18) dans une plage entre l'ouverture totale et la fermeture, pour réguler la vitesse d'entraînement du dispositif au niveau de sa zone d'éjection (18).

6. Dispositif selon la revendication 4,
**caractérisé en ce que**
la vis de transfert (1') présente par rapport à l'organe d'appui (9) un angle d'inclinaison, si possible réglable, de façon que l'organe d'appui (9) se soulève par son front avant de la masse de matière en grains lorsque la vis de transfert (1') est dirigée verticalement.

7. Dispositif selon la revendication 4,
**caractérisé en ce que**
la vis de transfert (1') a une pente pour l'organe de réception (9), cette pente augmentant en direction de l'unité d'entraînement (2').

8. Dispositif selon la revendication 4,
**caractérisé en ce que**
l'organe d'appui (9) possède des unités de couplage (26) permettant de regrouper plusieurs dispositifs en un ensemble augmentant la zone de travail.

9. Dispositif selon la revendication 4,
**caractérisé en ce que**
l'organe d'appui (9) comporte un capteur de température (27) pour détecter la température de la matière en grains, débitée, et le capteur de température (27) est reliée à des installations de réglage pour réguler la vitesse de transport du dispositif.

10. Dispositif selon la revendication 1 ou 4,
**caractérisé en ce que**
la vis de transfert (1,1') possède un canal de guidage axial (4) et des orifices de sortie (5), radiaux, communiquant avec une installation d'alimentation en air ou en liquide (7).
